# EUROPÄISCHE PATENTANMELDUNG

(11) **EP 1 426 215 A1**
(43) Veröffentlichungstag der Anmeldung: **09.06.2004**
(21) Anmeldenummer: 02292999.6
(22) Anmeldetag: 05.12.2002
(51) Int. Cl.: B60H 1/32, B60H 1/00

(54) **Wasserkastenanordnung, insbesondere in Verbindung mit einer Heizungs- oder Klimaanlage für ein Kraftfahrzeug**

(71) Anmelder: Behr France S.A.R.L., F-68250 Rouffach (FR)
(72) Erfinder: Monnier, Yves, 68800 Thann (FR); Grigeois, Philippe, 68110 Illzach (FR); Bohn, Serge, 68230 Turkheim (FR)
(74) Vertreter: Grauel, Andreas, Dr.

(57) **Zusammenfassung**

Die Erfindung betrifft eine Wasserkastenanordnung (4), insbesondere für eine Heizungs- oder Klimaanlage für ein Kraftfahrzeug, mit einem Wasserkasten (3), welcher in oder an einem Gehäuse (2) angeordnet ist, wobei der Wasserkasten (3) in das Gehäuse (2) integriert ausgebildet ist.

## Beschreibung

Die Erfindung betrifft eine Wasserkastenanordnung, insbesondere für Heizungs- oder Klimaanlage für ein Kraftfahrzeug, gemäß dem Oberbegriff des Anspruchs 1.

Bekannt ist ein Wasserkasten, der von unten an das Gehäuse einer Klimaanlage, d.h. das den Verdampfer der Klimaanlage aufnehmende Gehäuse, angeschraubt ist. Dabei treten häufig Probleme in Hinblick auf die Dichtheit auf, so dass gelegentlich Wassertropfen seitlich austreten.

Es ist Aufgabe der Erfindung eine Wasserkastenanordnung zur Verfügung zu stellen, welche den oben genannten Nachteil nicht aufweist. Ferner sollen die Produktionskosten reduziert werden.

Diese Aufgabe wird gelöst durch eine Wasserkastenanordnung, insbesondere für eine Heizungs- oder Klimaanlage, mit den Merkmalen des Anspruchs 1.

Erfindungsgemäß ist der Wasserkasten integriert in dem Gehäuse ausgebildet, d.h. der Wasserkasten ist Teil des Gehäuses. Vorzugsweise ist hierbei zumindest ein Teil des Wasserkastens einstückig mit einem Teil des Gehäuses ausgebildet.

Vorzugsweise ist eine zweiteilige Ausbildung für Wasserkasten und Gehäuse vorgesehen. Dies verringert die Herstellungskosten, da nur zwei Formen erforderlich sind.

Bevorzugt ist die Wasserkastenanordnung quer zum Wasserkasten und Gehäuse geteilt. Dies ermöglicht einfache Formen zur Herstellung. Das heißt, dass die Teilung im eingebauten Zustand in vertikaler Richtung vorgesehen ist.

Die Teile sind vorzugsweise mittels einer Schweiß- oder Klebeverbindung verbunden. Dies ermöglicht eine einfache Montage, jedoch sind auch andere Verbindungen oder auch Kombinationen verschiedener Verbindungsarten möglich.

Vorzugsweise ist eine Nut-Feder-Verbindung vorgesehen, mit deren Hilfe die beiden Teile exakt positioniert werden können. Die Nut-Feder-Verbindung ist insbesondere im Bereich des Wasserkastens angeordnet.

In der Wasserkastenanordnung ist, insbesondere oberhalb des Wasserkastens, ein Verdampfer angeordnet.

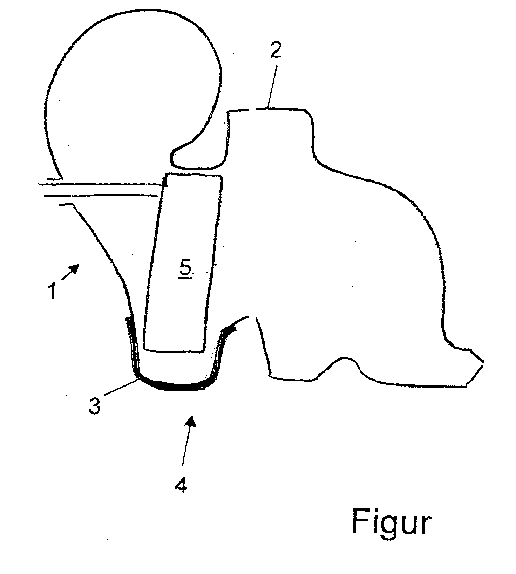

Im Folgenden wird die Erfindung anhand eines Ausführungsbeispiels unter Bezugnahme auf die Zeichnung im Einzelnen erläutert. Die einzige Figur zeigt eine schematische Darstellung eines Schnittes quer durch eine Wasserkastenanordnung.

Eine Klimaanlage 1 weist ein Gehäuse 2 mit Wasserkasten 3, im Folgenden als Wasserkastenanordnung 4 bezeichnet, auf. In der Wasserkastenanordnung 4 ist ein Verdampfer 5 angeordnet.

Entlang der Schnittlinie der Figur ist die Wasserkastenanordnung 4 geteilt, so dass die Wasserkastenanordnung 4 aus zwei Teilen besteht, die mittels einer Schweißnaht verbunden sind. Hierbei sind die aneinander anliegenden Bereiche der beiden Teile im Bereich des Wasserkastens 3 derart ausgebildet, dass sich eine Art Nut-Feder-Verbindung ergibt, wodurch eine exakte Positionierung und dadurch auch eine exakte Schweißnaht gewährleistet wird.

Zur Herstellung der Wasserkastenanordnung 4 werden die beiden Teile der Wasserkastenanordnung 4 in entsprechenden Werkzeugen hergestellt. Nach dem Zusammenbau, wobei hierbei auch der Verdampfer 5 eingelegt und fixiert wird, erfolgt das Verschweißen der beiden Teile, wobei die Schweißnaht insbesondere im Bereich des Wasserkastens 3 fluiddicht ausgebildet ist.

Gemäß einer nicht dargestellten Variante ist eine Nut-Feder-Verbindung über die gesamte Kontaktfläche der beiden Teile vorgesehen, und die Fixierung der beiden Teile aneinandererfolgt mittels einer Klebeverbindung.

## Patentansprüche

1. Wasserkastenanordnung, insbesondere für eine Heizungs- oder Klimaanlage für ein Kraftfahrzeug, mit einem Wasserkasten (3), welcher in oder an einem Gehäuse (2) angeordnet ist, **dadurch gekennzeichnet, dass** der Wasserkasten (3) in das Gehäuse (2) integriert ausgebildet ist.

2. Wasserkastenanordnung nach Anspruch 1, **dadurch gekennzeichnet, dass** zumindest ein Teil des Wasserkastens (3) einstückig mit einem Teil des Gehäuses (2) ausgebildet ist.

3. Wasserkastenanordnung nach Anspruch 1 oder 2, **dadurch gekennzeichnet, dass** der Wasserkasten (3) und das Gehäuse (2) zweiteilig ausgebildet sind.

4. Wasserkastenanordnung nach einem der vorhergehenden Ansprüche, **dadurch gekennzeichnet, dass** die Wasserkastenanordnung (4) quer zum Wasserkasten (3) und Gehäuse (2) geteilt ist.

5. Wasserkastenanordnung nach einem der Ansprüche 3 bis 4, **dadurch gekennzeichnet, dass** die Wasserkastenanordnung (4) in vertikaler Richtung geteilt ist.

6. Wasserkastenanordnung nach einem der Ansprüche 3 bis 5, **dadurch gekennzeichnet, dass** die Teile mittels einer Schweiß- oder Klebeverbindung verbunden sind.

7. Wasserkastenanordnung nach einem der Ansprüche 3 bis 6, **dadurch gekennzeichnet, dass** die Teile mittels einer Nut-Feder-Verbindung positioniert sind.

8. Wasserkastenanordnung nach Anspruch 7, **dadurch gekennzeichnet, dass** die Nut-Feder-Verbindung im Bereich des Wasserkastens (3) angeordnet ist.

9. Wasserkastenanordnung nach einem der vorhergehenden Ansprüche, **dadurch gekennzeichnet, dass** im Gehäuse (2) ein Verdampfer (5) angeordnet ist.
